# EUROPEAN PATENT SPECIFICATION

(11) **EP 1 766 270 B1**
(45) Date of publication and mention of the grant of the patent: **06.07.2016**
(21) Application number: 05750210.6
(22) Date of filing: 17.05.2005
(51) Int. Cl.: F16J 15/34, B62D 55/088

(54) **SEALING SYSTEM**
DICHTUNGSSYSTEM
SYSTÈME DE FERMETURE HERMÉTIQUE

(30) Priority: 15.07.2004 US 891778
(43) Date of publication of application: 28.03.2007
(73) Proprietor: CATERPILLAR INC., Peoria IL 61629-6490 (US)
(72) Inventor: BEARDSLEY, Brad, M., 100 N.E. Adams St. Peoria, IL61929 (US); BOWMAN, David E., 100 N.E. Adams St. Peoria, IL61929 (US); DIEKEVERS, Mark S., 100 N.E. Adams St. Peoria, IL61929 (US); RAAB, Karen R., 100 N.E. Adams St. Peoria, IL61929 (US); SMITH, William C., 100 N.E. Adams St. Peoria, IL61929 (US); WEAVER, D. Trent, 100 N.E. Adams St. Peoria, IL61929 (US)
(74) Representative: Wagner & Geyer
(86) International application number: PCT/US2005/017369
(87) International publication number: WO 2006/019455

(56) References cited:
- US-A- 4 295 654
- US-A- 6 045 200

## Description

### Technical Field

This disclosure is directed to a sealing system, and more particularly, this disclosure is directed to a sealing system appropriate for use with an endless track for a track-type work machine.

### Background

End face seals are commonly used in severe service environments to exclude external contaminants such as grit, water, and the like from joints between components that move relative to one another and to retain lubricants therein. One such application for seals of this type is in the pin joints of an endless track on a track-type work machine. Such tracks often operate in abrasive and/or corrosive environments. The track joints may be exposed to corrosives and/or abrasive material, such as mud, dust, sand, or rock at temperatures that may reach the extremes found in either the deserts or the arctic regions.

To effectively seal out such abrasive material, and to effectively seal in lubricants, the end face seals are formed to mate with and sealingly engage the end faces of their associated bushings. However, as the bushing rotates with respect to the end face seal, the seal may wear the bushing or the bushing may wear the seal. As the bushing and/or seal wears, the effectiveness of the seal may be reduced, possibly causing leaking and possibly allowing abrasive materials, such as sand and grit, to enter the area between the bushing and the seal. Once this occurs, wear is accelerated, resulting in more leaking and more wear. Because the end face seal or bushing life may limit the life of a track, extending the life of the seal and bushing may extend the life of the track.

One known system for extending the life of a bushing in contact with an end face seal is disclosed in commonly owned U.S. Patent No. 6,045,200 and 6,145,941. The system disclosed in the '941 patent includes a thin chromium nitride coating applied to the end face of the bushing by vapor deposition. The coating thickness is about 10 microns. However, such a coating may wear quickly, and only somewhat extend the life of the bushing. It is not necessarily desirable to increase the thickness of the coating. For example, thicker coatings applied using thin film deposition techniques may have a tendency to spall and chip, further accelerating wear.

The disclosed sealing system satisfies one or more of the existing needs in the industry for an improved sealing system.

### Summary of the Invention

In one aspect, the present disclosure is directed to a bushing including an interior surface, an exterior surface, a first end, and a second end. An end face forms at least part of each of the first end and the second end. At least one of the exterior surface and the end face has a sealing surface formed at least in part of a coating including a material having a hardness level greater than about 1200 Knoop. The sealing surface has a thickness greater than about 35 microns and an average roughness (Ra) less than about 0.25 micron.

In another aspect, the present disclosure is directed to a method of sealing a seal and a bushing that are capable of relative movement. The method includes applying a coating on at least one of an exterior surface and an end face of the bushing to form a sealing surface. The sealing surface is at least partially formed of a material having a hardness greater than about 1200 Knoop, and is more than about 35 microns thick. The average roughness of the sealing surface is lowered to about 0.25 micron or less. The seal is placed in contact with the sealing surface to facilitate lubrication of the bushing. Further, the seal is movable relative to the bushing.

### Brief Description of the Drawings

FIG. 1 is a cross-sectional pictorial representation of a portion of an exemplary track joint.
FIG. 2 is an enlarged cross-sectional pictorial representation of a portion of the track joint of FIG. 1.
FIG. 3 is an enlarged cross-sectional pictorial representation of a portion of another exemplary track joint.
FIG. 4 is a cross-sectional pictorial representation of a portion of another exemplary track joint.

### Detailed Description

Reference will now be made in detail to exemplary embodiments that are illustrated in the accompanying drawings. Wherever possible, the same reference numbers will be used throughout the drawings to refer to the same or like parts.

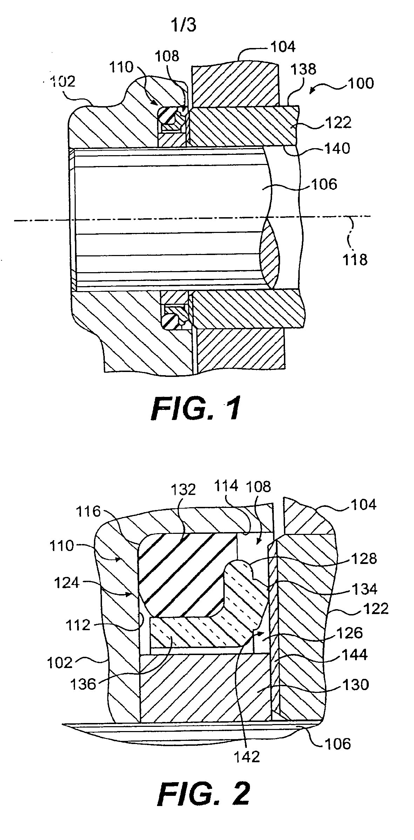

FIG. 1 shows an exemplary embodiment of one end of a track joint 100 of an endless track for a track-type work machine. The track joint 100 includes first and second pivotally interconnected overlapping links 102, 104, a track pin 106, and a sealing system 108. The links 102, 104 extend from the track joint 100 and connect to adjacent track joints (not shown) to create a track for a track-type work machine.

FIG. 2 is an enlargement of the track joint 100 shown in FIG. 1. As best seen in FIG. 2, the first link 102 includes a counter-bore 110 that is defined by an axially outwardly facing bore face 112, a cylindrical surface 114, and a corner portion 116.

The sealing system 108 is disposed intermediate the links 102, 104 and may be coaxially mounted along a pivot axis 118 through the track pin 106. The sealing system 108 may include a bushing 122 and a seal assembly 124. In addition, the sealing system may include a lubricant holding chamber 126 that may be formed at least in part by the bushing 122 and the seal assembly 124.

The seal assembly 124 may include an annular seal 128, a spacer ring 130, and a load ring 132. The annular seal 128 may be disposed generally concentrically with the pivot axis 118 within the counter-bore 110 of the first link 102. To ensure the retention of lubricant in the lubricant holding chamber 126 and to prevent the ingress of contaminants therein, the annular seal 128 is in sealing engagement with the bushing 122. The annular seal 128 may include a thermoset resin, a thermoplastic resin, a metal, a ceramic, and/or a thermoset elastomer, such as a polyurethane. However, the annular seal 128 could be made from other materials known in the art.

An integral sealing lip 134 may be provided on the annular seal 128 for engaging with the bushing 122. In addition, an annular base 136 may be included as part of the annular seal 128. The annular base may have a generally L-shaped cross-sectional configuration for supporting the sealing lip 134.

The load ring 132 may be integral or non-integral with the annular seal 128 and may support the annular seal 128 in the counter-bore 110 to provide static sealing engagement with both the annular base 136 and the counter-bore 110. The load ring 132 may be constructed of an elastomeric resilient material, for example, rubber. The spacer ring 130 may be loosely positioned on the track pin 106 adjacent to the bore face 112 of the first link 102 and the bushing 122 to limit the minimum axial distance therebetween.

The generally cylindrical bushing 122 may be disposed generally concentrically with the axis 118 and may include an exterior surface 138, an interior surface 140, and two ends, with each end including an end face 142. The bushing 122 may be formed of any substrate material that includes an opening for receiving another component, such as the pin 106. In the exemplary embodiment shown, the end face 142 includes a single surface extending between the exterior and interior surfaces 138, 140. However, the end face 142 may be stepped to include more than one surface, curved, or otherwise shaped as would be apparent to one skilled in the art. The exterior surface 138 may be in contact with the second link 104, and the interior surface 140 may be in rotatable contact with the track pin 106. The bushing 122 may have any length along the axis 118, and may be relatively flat, such as when the bushing 122 is a washer.

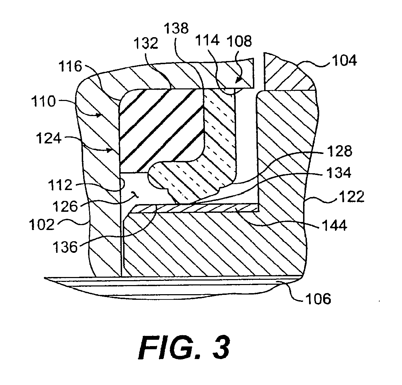

A sealing surface 144 may form a part or all of the end face 142, as depicted in FIG. 2, or the exterior surface 138, as depicted in FIG. 3. The sealing surface 144 may be formed, at least in part, of a material having a hardness greater than about 1200 Knoop, and in one exemplary embodiment, greater than 1400 Knoop. The sealing surface 144 may contain a corrosion resistant material and an abrasion resistant material. In one exemplary embodiment, the abrasion resistant material contains at least one of a carbide, nitride, boride, oxide, metallic glass, and the like. The corrosion resistant material may contain at least one of nickel, tungsten, titanium, chromium, aluminum, metallic glass, and the like. In one exemplary embodiment, corrosion resistant material may be a binder located between a plurality of particles of the abrasion resistant material. For example, the sealing surface 144 may be formed of a carbide of tungsten with a cobalt binder. In another example, the sealing surface 144 may include chromium carbide in a nickel chromium binder. In yet another example, the sealing surface 144 may include titanium carbide in a nickel and/or chromium binder. In yet another embodiment, the sealing surface 144 may be formed of a crystalline metallic matrix with carbide or alternative hard phase.

Because the sealing surface 144 may form the end face of the bushing 122, the bushing may be manufactured of any of a number of different materials. These materials could be tailored for primary load carrying properties such as strength, toughness, and tribological performance. In addition, one or more of the properties of the sealing surface 144 and bushing 122 may aid in providing an increased resistance to abrasive and/or corrosive wear. For example, some of these properties may include: the combination of the coating material chemistry; the coating material properties, such as hardness and inertness; the coating material thickness; the coating material microstructure; the coating material density; the physical attachment of the coating to the bushing or substrate material; and the surface texture of the coating. It should be noted that the coating may be just in the area under the seal, or under the seal and surrounding areas, even extending onto the outer surface.

The sealing surface 144 may be applied to the bushing 122 using any number of different techniques. In one exemplary embodiment, the sealing surface 144 may be sprayed onto the bushing 122. For example, the sealing surface 144 may be applied using a thermal spray process, such as a cold spray process or a high velocity oxygen fuel (HVOF) spray process. Alternatively, the sealing surface 144 may be formed using a plasma spray processing system, a wire arc processing system, a combustion spray processing system, or a detonation spray processing system. In one exemplary embodiment, the sealing surface 144 has a thickness greater than 35 microns, and in another embodiment, greater than 50 microns. In yet another embodiment, the thickness is greater than 75 microns. In yet another exemplary embodiment, the thickness is within the range of 90-150 microns. However, one skilled in the art will appreciate that the sealing surface may have a different thickness.

Because the sealing lip 134 of the annular seal 128 slidably moves along the sealing surface, the life of the annular seal may be affected by the roughness of the sealing surface. Accordingly, a smooth surface can reduce the wear of the annular seal 128. In order to extend the life of the annular seal 128, the sealing surface 144 may have an average roughness (Ra) of about 0.25 microns or less. In another exemplary embodiment, the Ra is about 0.15 microns or less. In yet another exemplary embodiment, the Ra is within the range of 0.08 to 0.1 micron. The Ra is measured radially on the surface of the end face and may be determined by first dividing the surface along a mean line such that the sum of the area above the line is equal to the sum of the area below the line and, then, summing the absolute values of all the areas above and below the mean line and dividing the areas by the sampling length.

The sealing surface 144 need not form the entire end face and/or exterior surface 138 of the bushing 122. Although the sealing surface 144 is shown as extending across the entire end face 142 and/or the exterior surface 138, it should be apparent that the sealing surface 144 optionally may form only the portion of the end face 142 and/or the exterior surface 138 that is in contact with the annular seal 128. Because the sealing lip 134 is annular, it contacts the sealing surface 144 in an annular ring forming a circular line contact. In one exemplary embodiment, the sealing surface 144 may be formed in an annular ring having an area less than the area of the end face and that directly corresponds to the annular ring of the sealing lip 134. It should also be apparent that the end face 142 may be any surface in contact with the annular seal 128. Accordingly, the end face 142 need not be the outermost feature of the bushing 122, but could be formed on a recess or step that may be in contact with the annular seal 128.

In one exemplary embodiment, the bushing 122 may be partially formed of a washer fixed to the bushing 122 and forming at least a portion of the end face 142. The washer may be disposed in a recess, step, or cutout in the bushing 122, or otherwise applied to form a portion of the end face 142. The sealing surface 144 may form a part of the washer, and may be in contact with the annular seal 128. In one exemplary embodiment the washer includes the sealing surface 144 prior to being attached to form a part of the bushing 122. In another exemplary embodiment, the sealing surface may be applied onto the washer after the washer is attached to form a part of the bushing 122.

In another exemplary embodiment, the bushing 122 may be partially formed of a sleeve fixed to the bushing 122 and forming at least a portion of the exterior surface 138. The sleeve may be disposed in a recess, step, or cutout in the bushing 122, or otherwise applied to form a portion of the exterior surface 138. The sealing surface 144 may form a part of the sleeve, and may be in contact with the annular seal 128. In one exemplary embodiment the sleeve includes the sealing surface 144 prior to being attached to form a part of the bushing 122. In another exemplary embodiment, the sealing surface may be applied onto the sleeve after the sleeve is attached to form a part of the bushing 122.

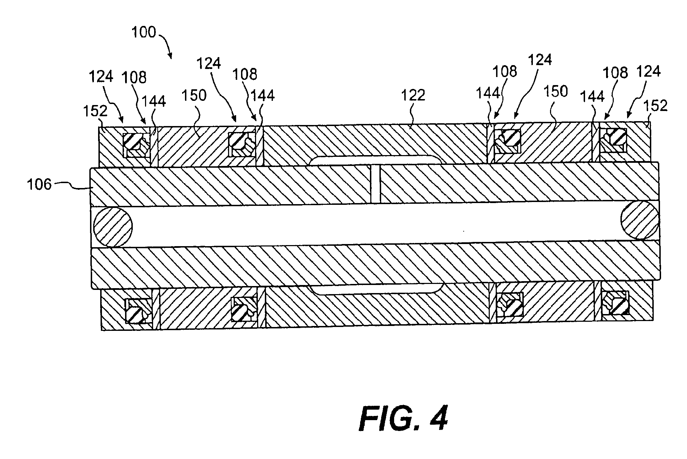

FIG. 4 shows another exemplary track joint 100. In addition to the bushing 122 described above, the track joint 100 of FIG. 4 includes an insert 150 at each end of the bushing 122 with a collar 152 adjacent the inserts 150 at each end of the track joint 100. The inserts 150 are disposed adjacent the bushing 122 and are disposed about the pin. Each interface between the bushing 122 and the inserts 150, and each interface between the inserts 150 and the collars 152, includes a sealing system 108 having a seal assembly 124 and a sealing surface 144.

Each insert 150 includes ends, with a sealing surface 144 formed on one end and a seal assembly 124 disposed in the other end. The seal assembly 124 in the insert 150 is in sealing contact with the sealing surface 144 on the bushing 122. In addition, the collar 152 includes a seal assembly 124 disposed therein. The seal assembly 124 in the collar 152 is in sealing engagement with the sealing surface 144 forming the end of the insert 150. It should be noted that the insert 150 may include a sealing surface at one or both ends and, in addition, may include a seal assembly 128 at each ends. The collar 152 likewise may include a seal assembly 124 or a sealing surface 144 in one or more ends.

An exemplary method of manufacturing a track for a track type work machine will now be described. Initially, a bushing may be formed using any method standard in the art. For example, the bushing may be cast and then machined, or alternatively, may be machined from solid material. The bushing 122 may be formed to have an exterior surface 138, an interior surface 140, and at least one end face 142. After the bushing 122 is formed, it may be hardened using a carburizing process or other hardening process known in the art. In one exemplary embodiment, a washer is attached to the bushing to form at least a portion of the end face 142.

The sealing surface 144 may be then be applied to form at least a part of the end face 142 of the bushing 122. Although the application process could be performed using any number of methods, in this exemplary method, the sealing surface 144 is applied using an HVOF spray process. Before applying the sealing surface 144, the end face 142 may be cleaned and/or roughened. This may be accomplished by, for example, grit blasting, water jet roughening, laser roughening, or other roughening techniques. Grit blasting may thoroughly clean the end face 142 by removing any impurities and may roughen the end face surface so that the sealing surface 144 can securely bond to become a part of the end face surface.

After the bushing 122 is grit blasted, the HVOF spray process may be used to apply the sealing surface 144, which may be, for example, a carbide coating, to the end face 142. The HVOF spray process may include ejecting an ignited oxygen fuel mixture from a HVOF gun in a circular stream. A powder stream of coating material may be ejected and shaped by the circular flame to provide uniform heating, melting, and acceleration. The partially or completely melted coating material may impact the end face 142 in a molten or softened state, and may flatten geometrically, accumulating to become part of the end face 142.

The coating material may be applied until the sealing surface 144 has a desired thickness, for example, greater than about 35 microns. In another example, the thickness is greater than about 50 microns. In yet another example, the thickness is greater than about 75 microns, and in yet another example, the thickness is in the range of 90-150 microns. Once the desired thickness is achieved, the average roughness of the sealing surface 144 may be lowered. Lowering the Ra may include at least one of polishing, grinding, honing and lapping the sealing surface 144. Polishing may be accomplished using diamond grinding techniques or other techniques known in the art. In one embodiment, when the Ra of the sealing surface 144 is less than about 0.25 microns, the bushing 122 may be assembled on a track system. In another embodiment, the Ra of the sealing surface 144 is less than about 0.15 microns.

In one exemplary embodiment the coating may be applied to form the sealing surface 144 on a washer, which is then attached to the bushing 122 to form at least a part of the bushing 122. In another exemplary embodiment, an insert 150 may be formed as a bushing, using methods known in the art. At least one end of the insert 150 may be configured to receive and/or support a seal assembly 124, while the other end may include a coating forming a sealing surface 144.

To assemble the track system, the track pin 106 may be inserted through the bushing 122. In addition, the annular seal 128, the spacer ring 130, and the load ring 132 may also be installed in a link, such as first link 102 or second link 104. In the exemplary embodiment shown in FIG. 4, the track pin 106 may be inserted through the inserts 150 and the collars 152. Accordingly, the inserts 150 may be disposed adjacent to the bushing 122, and may support the seal assembly 124 in sealing contact with the bushing 122. Likewise, the collar 152 may support another seal assembly 124 in sealing contact with the insert 150.

The various pieces may be connected together using methods known in the art so that the annular seal 128 is in sealing contact with the sealing surface of the bushing 122. In this manner, the bushing is rotatable about the pin 106. A lubricant, such as a 75W-140 mineral oil or synthetic oil, may be applied between the bushing 122 and the track pin 106 and may accumulate within the lubricant holding chamber 126 next to the annular seal 128 and the end face 142. The annular seal 128 is configured to be in direct contact with the end face 142 and may operate to retain lubricant in the lubricant holding chamber 126 and to prevent the ingress of contaminants, such as dirt and sand. Each bushing is attached to other bushings through links, such as first link 102 and second link 104, to create a track as known in the art.

In one exemplary embodiment, the sealing surface 144 is formed on the exterior surface of the bushing 122. Accordingly, the contact point between the second link 104 and the bushing 122 may be along a surface having the properties of the sealing surface 144.

### Industrial Applicability

The bushings 122 described herein may provide advantages over prior bushings used on endless track machines. For example, the useful life of the bushing 122 may be longer than previous bushings because the sealing surface 144 may have improved resistance to abrasive wear and/or corrosive wear. In addition, the sealing surface 144 may be have an increased resistance to pitting, spalling, and/or flaking, even with typically applied stresses. Therefore, the bushing may be resistant to wear from the annular seal 128 that contacts the bushing 122. Further, the sealing surface 144 may help resist bushing wear from the annular seal 128 by increasing resistance to grooving in the bushing. Increasing the life of the bushing 122 may prolong the life of a track using the bushing 122, thereby reducing downtime and increasing work efficiency.

In addition to potentially increasing the life of the bushing 122, the life of the seal that is in contact with the bushing 122 may be also prolonged. This is because the sealing lip 134 in contact with the sealing surface 144 may wear at a slower rate than a sealing lip 134 in contact with prior bushings.

It should be noted that the sealing system described in this disclosure need not be limited to a sealing surface for a track-type system, but could be used in other applications. For example, the sealing surface 144 could be used on any surface that is in a dynamic or rubbing contact with a seal. Some examples of this may include sealing surfaces on axles or hydraulic sealing rods. In addition, the sealing system may be used on pin joints for linkages. It may also be used as a radial seal on a pin. Other uses can be contemplated by those skilled in the art. It should be noted that the claims are intended to cover such applications.

It will be apparent to those skilled in the art that various modifications and variations can be made in the disclosed embodiments without departing from the scope of the invention. Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A bushing (122), comprising:
an interior surface (140), an exterior surface (138), a first end, and a second end; and
an end face (142) forming at least part of at least one of the first end and the second end, at least one of the exterior surface (138) and the end face (142) having a sealing surface (144) formed at least in part of a coating including a material having a hardness level greater than about 1200 Knoop, the sealing surface (144) having a thickness greater than about 35 microns, and having an average roughness (Ra) less than about 0.25 micron.

2. The bushing (122) of claim 1, wherein the sealing surface (144) contains a corrosion resistant material and an abrasion resistant material.

3. The bushing (122) of claim 2, wherein the corrosion resistant material contains at least one of nickel, chromium, and a metallic glass.

4. The bushing (122) of claim 2 wherein the abrasion resistant material contains at least one of a carbide, a boride, a nitride, an oxide, and a metallic glass.

5. The bushing (122) of claim 4, wherein the carbide is at least one of chrome carbide and titanium carbide.

6. The bushing (122) of claim 2, wherein the corrosion resistant material is a binder located between a plurality of particles of the abrasion resistant material.

7. The bushing (122) of claim 1, wherein the sealing surface (144) is more than about 75 microns thick.

8. The bushing (122) of claim 1, wherein the sealing surface (144) is formed at least in part of a coating including a material having a hardness greater than 1400 Knoop, the sealing surface (144) having an Ra less than or equal to about 0.1 micron.

9. The bushing (122) of claim 1, wherein at least one of the first and second ends includes a washer, the washer forming at least part of the end face (142).

10. The bushing (122) of claim 1, wherein a sleeve forms at least part of the exterior surface (138) having the sealing surface (144).

11. A sealing system (108) for a work machine, comprising:
a bushing (122) having an interior surface (140), an exterior surface (138), and an end face (142), at least a portion of at least one of the end face (142) and the exterior surface (138) having a sealing surface (144) formed of a coating including a material having a hardness level greater than about 1200 Knoop, the sealing surface (144) being greater than about 35 microns thick, and having an average roughness (Ra) of about 0.25 micron or less; and
a seal assembly (124) including an annular sealing member in sealing contact with the sealing surface (144), the sealing member and the sealing surface (144) being configured to facilitate lubrication of the bushing (122).

12. The sealing system (108) of claim 11, wherein the sealing surface (144) contains a corrosion resistant material and an abrasion resistant material.

13. The sealing system (108) of claim 11, wherein the corrosion resistant material contains at least one of nickel, chromium, and a metallic glass.

14. The sealing system (108) of claim 12 wherein the abrasion resistant material contains at least one of a carbide, a boride, a nitride, an oxide, and a metallic glass.

15. The sealing system (108) of claim 14, wherein the carbide is at least one of chrome carbide and titanium carbide.

16. The sealing system (108) of claim 12, wherein the corrosion resistant material is a binder located between a plurality of particles of the abrasion resistant material.

17. The sealing system (108) of claim 11, wherein the coating has a thickness greater than about 75 microns.

18. The sealing system (108) of claim 11, wherein the coating includes a material having a hardness greater than about 1400 Knoop and an Ra less than or equal to about 0.1 micron.

19. The sealing system (108) of claim 11, wherein the seal engages the sealing surface (144) in an annular ring forming a circular contact line.

20. The sealing system (108) of claim 11, wherein the sealing surface (144) is on at least a portion of the end face (142), and at least a portion of the exterior surface (138) of the bushing (122) has a coating of the same material and properties of the sealing surface (144).

21. The sealing system (108) of claim 11, wherein the sealing member is formed of at least one of a thermoplastic resin, a thermoset resin, and a thermoset elastomer.

22. The sealing system (108) of claim 11, wherein the sealing surface (144) has a surface area less than the surface area of the end face (142).

23. The sealing system (108) of claim 11, wherein at least one of the first and second ends includes a washer, the washer forming at least part of the end face (142).

24. The sealing system (108) of claim 11, wherein a sleeve forms at least part of the exterior surface (138) having the sealing surface (144).

25. The sealing system (108) of claim 11, including an insert (150) adjacent the bushing (122), the insert (150) having a first and a second end face (142), the first end face (142) being configured to support the seal assembly (124), the second end face (142) having a second sealing surface (144) formed of a coating including a material having a hardness level greater than about 1200 Knoop, the second sealing surface (144) being greater than about 35 microns thick, and having an average roughness (Ra) of about 0.25 micron or less.

26. A method of manufacturing a track for a track-type work machine, comprising:
forming a bushing (122) having an exterior surface (138), an interior surface (140), and an end face (142);
spraying a coating on at least one of the end face (142) and the exterior surface (138), the coating forming a sealing surface (144), wherein the sealing surface (144) includes a material having a hardness greater than about 1200 Knoop, and wherein spraying the coating includes applying the coating until the coating reaches a thickness of more than about 75 microns;
lowering the average roughness of the sealing surface (144) to about 0.25 microns or less;
inserting a pin in the bushing (122), the bushing (122) being rotatable about the pin;
placing a seal in contact with the sealing surface (144) to assist in facilitating lubrication of the bushing (122); and
affixing the bushing (122) to the track.

27. The method of claim 26, wherein lowering the average roughness includes at least one of polishing, grinding, honing and lapping the sealing surface (144).

28. The method of claim 26, wherein spraying the coating includes thermal spraying of the coating.

29. The method of claim 28, wherein the thermal spraying of the coating includes high velocity oxygen fuel spraying of the coating.

30. The method of claim 26, wherein forming the bushing (122) includes fixing a washer to the bushing (122), the washer forming at least a part of the end face (142).

31. The method of claim 26, wherein forming the bushing (122) includes fixing a sleeve to the bushing (122), the sleeve forming at least part of the exterior surface (138) of the bushing (122).

## Patentansprüche

1. Hülse (122), die Folgendes aufweist:
eine Innenfläche (140), eine Außenfläche (138), ein erstes Ende und ein zweites Ende; und
eine Endstirnseite (142), die zumindest einen Teil des ersten Endes und/oder des zweiten Endes bildet, wobei die Außenfläche (138) und/oder die Endstirnseite (142) eine Dichtungsfläche (144) haben, die zumindest teilweise aus einer Beschichtung geformt ist, die ein Material aufweist, das ein Härteniveau von mehr als ungefähr 1200 Knoop hat, wobei die Dichtungsfläche (144) eine Dicke von mehr als ungefähr 35 Mikrometer hat und eine durchschnittliche Rauheit (Ra) von weniger als ungefähr 0,25 Mikrometer hat.

2. Hülse (122) nach Anspruch 1, wobei die Dichtungsfläche (144) ein korrosionsbeständiges Material und ein abrasionsbeständiges Material enthält.

3. Hülse (122) nach Anspruch 2, wobei das korrosionsbeständige Material Nickel und/oder Chrom und/oder ein metallisches Glas enthält.

4. Hülse (122) nach Anspruch 2, wobei das abrasionsbeständige Material ein Carbid und/oder ein Borid und/oder ein Nitrid und/oder ein Oxid und/oder ein metallisches Glas enthält.

5. Hülse (122) nach Anspruch 4, wobei das Carbid Chromcarbid und/oder Titancarbid ist.

6. Hülse (122) nach Anspruch 2, wobei das korrosionsbeständige Material ein Binder ist, der zwischen einer Vielzahl von Partikeln des abrasionsbeständigen Materials angeordnet ist.

7. Hülse (122) nach Anspruch 1, wobei die Dichtungsfläche (144) mehr als ungefähr 75 Mikrometer dick ist.

8. Hülse (122) nach Anspruch 1, wobei die Dichtungsfläche (144) zumindest teilweise aus einer Beschichtung geformt ist, die ein Material mit einer Härte von mehr als 1400 Knoop aufweist, wobei die Dichtungsfläche (144) eine Ra von kleiner gleich ungefähr 0,1 Mikrometer hat.

9. Hülse (122) nach Anspruch 1, wobei das erste Ende und/oder das zweite Ende eine Scheibe aufweisen, wobei die Scheibe zumindest einen Teil der Endstirnseite (142) formt.

10. Hülse (122) nach Anspruch 1, wobei eine Buchse zumindest einen Teil der Außenfläche (138) mit der Dichtungsfläche (144) formt.

11. Dichtungssystem (108) für eine Arbeitsmaschine, welches Folgendes aufweist:
eine Hülse (122) mit einer Innenfläche (140), einer Außenfläche (138) und einer Endstirnseite (142), wobei zumindest ein Teil der Endstirnseite (142) und/oder der Außenfläche (138) eine Dichtungsfläche (144) hat, die aus einer Beschichtung geformt ist, die ein Material aufweist, das ein Härteniveau von mehr als ungefähr 1200 Knoop hat, wobei die Dichtungsfläche (144) mehr als ungefähr 35 Mikrometer dick ist und eine durchschnittliche Rauheit (Ra) von ungefähr 0,25 Mikrometer oder weniger hat; und
eine Dichtungsanordnung (124), die ein ringförmiges Dichtungsglied in dichtendem Kontakt mit der Dichtungsfläche (144) aufweist, wobei das Dichtungsglied und die Dichtungsfläche (144) so konfiguriert sind, dass sie eine Schmierung der Hülse (122) ermöglichen.

12. Dichtungssystem (108) nach Anspruch 11, wobei die Dichtungsfläche (144) ein korrosionsbeständiges Material und ein abrasionsbeständiges Material enthält.

13. Dichtungssystem (108) nach Anspruch 11, wobei das korrosionsbeständige Material Nickel und/oder Chrom und/oder ein metallisches Glas enthält.

14. Dichtungssystem (108) nach Anspruch 12, wobei das abrasionsbeständige Material ein Carbid und/oder ein Borid und/oder ein Nitrid und/oder ein Oxid und/oder ein metallisches Glas enthält.

15. Dichtungssystem (108) nach Anspruch 14, wobei das Carbid Chromcarbid und/oder Titancarbid ist.

16. Dichtungssystem (108) nach Anspruch 12, wobei das korrosionsbeständige Material ein Binder ist, der zwischen einer Vielzahl von Partikeln des abrasionsbeständigen Materials angeordnet ist.

17. Dichtungssystem (108) nach Anspruch 11, wobei die Beschichtung eine Dicke von mehr als ungefähr 75 Mikrometer hat.

18. Dichtungssystem (108) nach Anspruch 11, wobei die Beschichtung ein Material mit einer Härte von mehr als ungefähr 1400 Knoop und eine Ra von kleiner gleich ungefähr 0,1 Mikrometer aufweist.

19. Dichtungssystem (108) nach Anspruch 11, wobei die Dichtung mit der Dichtungsfläche (144) in einem ringförmigen Ring in Eingriff kommt, der eine kreisförmige Kontaktfläche bildet.

20. Dichtungssystem (108) nach Anspruch 11, wobei die Dichtungsfläche (144) zumindest auf einem Teil der Endstirnseite (142) ist, und wobei zumindest ein Teil der Außenfläche (138) der Hülse (122) eine Beschichtung aus dem gleichen Material und mit den gleichen Eigenschaften wie die Dichtungsfläche (144) hat.

21. Dichtungssystem (108) nach Anspruch 11, wobei das Dichtungsglied aus einem thermoplastischen Harz und/oder einem thermisch aushärtendem Harz und/oder einem thermisch aushärtendem Elastomer geformt ist.

22. Dichtungssystem (108) nach Anspruch 11, wobei die Dichtungsfläche (144) eine Dichtungsfläche von weniger als der Oberfläche der Endstirnseite (142) hat.

23. Dichtungssystem (108) nach Anspruch 11, wobei das erste Ende und/oder das zweite Ende eine Scheibe aufweist, wobei die Scheibe zumindest einen Teil der Endstirnseite (142) formt.

24. Dichtungssystem (108) nach Anspruch 11, wobei eine Buchse zumindest einen Teil der Außenfläche (138) mit der Dichtungsfläche (144) bildet.

25. Dichtungssystem (108) nach Anspruch 11, welches einen Einsatz (150) benachbart zur Hülse (122) aufweist, wobei der Einsatz (150) eine erste und eine zweite Endstirnseite (142) hat, wobei die erste Endstirnseite (142) konfiguriert ist, um die Dichtungsanordnung (124) zu tragen, wobei die zweite Endstirnseite (142) eine zweite Dichtungsfläche (144) hat, die aus einer Beschichtung geformt ist, die ein Material mit einem Härteniveau von mehr als ungefähr 1200 Knoop aufweist, wobei die zweite Dichtungsfläche (144) mehr als ungefähr 35 Mikrometer dick ist und eine durchschnittliche Rauheit (Ra) von ungefähr 0,25 Mikrometer oder weniger hat.

26. Verfahren zur Herstellung einer Raupe einer Raupenarbeitsmaschine, welches Folgendes aufweist:
Formen einer Hülse (122) mit einer Außenfläche (138), einer Innenfläche (140) und einer Endstirnseite (142);
Spritzen einer Beschichtung auf die Endstirnseite (142) und/oder die Außenfläche (138), wobei die Beschichtung eine Dichtungsfläche (144) bildet, wobei die Dichtungsfläche (144) ein Material mit einer Härte von mehr als ungefähr 1200 Knoop hat, und wobei das Spritzen der Beschichtung aufweist, die Beschichtung aufzubringen, bis die Beschichtung eine Dicke von mehr als ungefähr 75 Mikrometer erreicht;
Verringern der durchschnittlichen Rauheit der Dichtungsfläche (144) auf ungefähr 0,25 Mikrometer oder weniger;
Einführen eines Stiftes in die Hülse (122), wobei die Hülse (122) um den Stift drehbar ist;
Anordnen einer Dichtung in Kontakt mit der Dichtungsfläche (144), um beim Ermöglichen der Schmierung der Hülse (122) zu helfen; und
Befestigen der Hülse (122) an der Raupe.

27. Verfahren nach Anspruch 26, wobei das Verringern der durchschnittlichen Rauheit Polieren und/oder Schleifen und/oder Honen und/oder Läppen der Dichtungsfläche (144) aufweist.

28. Verfahren nach Anspruch 26, wobei das Spritzen der Beschichtung thermisches Spritzen der Beschichtung aufweist.

29. Verfahren nach Anspruch 28, wobei das thermische Spritzen der Beschichtung Hochgeschwindigkeitsflammspritzen der Beschichtung aufweist.

30. Verfahren nach Anspruch 26, wobei das Formen der Hülse (122) aufweist, eine Scheibe an der Hülse (122) zu befestigen, wobei die Scheibe zumindest einen Teil der Endstirnseite (142) bildet.

31. Verfahren nach Anspruch 26, wobei das Formen der Hülse (122) das Befestigen einer Buchse auf der Hülse (122) aufweist, wobei die Buchse zumindest einen Teil der Außenfläche (138) der Hülse (122) bildet.

## Revendications

1. Bague (122), comprenant :
une surface intérieure (140), une surface extérieure (138), une première extrémité et une deuxième extrémité ; et
une face d'extrémité (142) formant au moins une partied'au moins l'une de la première extrémité et de la deuxième extrémité, au moins l'une de la surface extérieure (138) et de la face d'extrémité (142) comportant une surface d'étanchéité (144) constituée au moins en partie d'un revêtement comprenant un matériau ayant un niveau de dureté supérieur à environ 1200 Knoop, la surface d'étanchéité (144) ayant une épaisseur supérieure à environ 35 microns, et ayant une dureté moyenne (Ra) inférieure à environ 0,25 µm.

2. Bague (122) selon la revendication 1, dans laquelle la surface d'étanchéité (144) contient un matériau résistant à la corrosion et un matériau résistant à l'abrasion.

3. Bague (122) selon la revendication 2, dans laquelle le matériau résistant à la corrosion contient au moins un matériau parmi le nickel, le chrome et le verre métallique.

4. Bague (122) selon la revendication 2, dans laquelle le matériau résistant à l'abrasion contient au moins un matériau parmi un carbure, un borure, un nitrure, un oxyde et un verre métallique.

5. Bague (122) selon la revendication 4, dans laquelle le carbure est au moins l'un du carbure de chrome et du carbure de titane.

6. Bague (122) selon la revendication 2, dans laquelle le matériau résistant à la corrosion est un liant situé entre une pluralité de particules du matériau résistant à l'abrasion.

7. Bague (122) selon la revendication 1, dans laquelle la surface d'étanchéité (144) a une épaisseur supérieure à environ 75 µm.

8. Bague (122) selon la revendication 1, dans laquelle la surface d'étanchéité (144) est constituée au moins en partie d'un revêtement comprenant un matériau ayant une dureté supérieure à 1400 Knoop, la surface d'étanchéité (144) ayant uneRa inférieure ou égale à environ 0,1 µm.

9. Bague (122) selon la revendication 1, dans laquelle au moins l'une des premières et deuxième extrémités comprend une rondelle, la rondelle faisant au moins partie de la face d'extrémité (142).

10. Bague (122) selon la revendication 1, dans laquelle un manchon forme au moins une partie de la surface extérieure (138) comportant la surface d'étanchéité (144).

11. Système d'étanchéité (108) pour un engin de travaux, comprenant :
une bague (122) comportant une surface intérieure (140), une surface extérieure (138), et une face d'extrémité (142), au moins une portion d'au moins l'une de la face d'extrémité (142) et de la surface extérieure (138) comportant une surface d'étanchéité (144) constituée d'un revêtement comprenant un matériau ayant un niveau de dureté supérieur à environ 1200 Knoop, la surface d'étanchéité (144) ayant une épaisseur supérieure à environ 35 µm, et ayant une rugosité moyenne (Ra) d'environ 0,25 µm ou moins ; et
un ensemble d'étanchéité (124) comprenant un élément d'étanchéité annulaire en contact étanche avec la surface d'étanchéité (144), l'élément d'étanchéité et la surface d'étanchéité (144) étant agencés pour faciliter la lubrification de la bague (122).

12. Système d'étanchéité (108) selon la revendication 11, dans lequel la surface d'étanchéité (144) contient un matériau résistant à la corrosion et un matériau résistant à l'abrasion.

13. Système d'étanchéité (108) selon la revendication 11, dans lequel le matériau résistant à la corrosion contient au moins un matériau parmi le nickel, le chrome et le verre métallique.

14. Système d'étanchéité (108) selon la revendication 12, dans lequel le matériau résistant à l'abrasion contient au moins un matériau parmi un carbure, un borure, un nitrure, un oxyde, et un verre métallique.

15. Système d'étanchéité (108) selon la revendication 14, dans lequel le carbure est au moins l'un du carbure de chrome et du carbure de titane.

16. Système d'étanchéité (108) selon la revendication 12, dans lequel le matériau résistant à la corrosion est un liant situé entre une pluralité de particules du matériau résistant à l'abrasion.

17. Système d'étanchéité (108) selon la revendication 11, dans lequel le revêtement a une épaisseur supérieure à environ 75 µm.

18. Système d'étanchéité (108) selon la revendication 11, dans lequel le revêtement comprend un matériau ayant une dureté supérieure à environ 1400 Knoop, et un Ra inférieur ou égal à environ 0,1 µm.

19. Système d'étanchéité (108) selon la revendication 11, dans lequel le joint d'étanchéité est en prise avec la surface d'étanchéité (144) dans unanneau annulaire formant une ligne de contact circulaire.

20. Système d'étanchéité (108) selon la revendication 11, dans lequel la surface d'étanchéité (144) se trouve sur au moins une portion de la face d'extrémité (142), et au moins une portion de la surface extérieure (138) de la bague (122) comporte un revêtement fait du même matériau et ayant les mêmes propriétés que la surface d'étanchéité (144).

21. Système d'étanchéité (108) selon la revendication 11, dans lequel l'élément d'étanchéité est constitué d'au moins l'un d'une résine thermoplastique, d'une résine thermo-durcissable, et d'un élastomère thermodurcissable.

22. Système d'étanchéité (108) selon la revendication 11, dans lequel la surface d'étanchéité (144) a une surface inférieure à la surface de la face d'extrémité (142).

23. Système d'étanchéité (108) selon la revendication 11, dans lequel au moins l'une de la première et de la deuxième extrémité comprend une rondelle, la rondelle faisant au moins partie de la face d'extrémité (142).

24. Système d'étanchéité (108) selon la revendication 11, dans lequel un manchon constitue au moins une partie de la surface extérieure (138) comportant la surface d'étanchéité (144).

25. Système d'étanchéité (108) selon la revendication 11, comprenant un insert (150) adjacent à la bague (122), l'insert (150) comportant une première et une deuxième face d'extrémité (142), la première face d'extrémité (142) étant agencée pour supporter l'ensemble d'étanchéité (124), la deuxième face d'extrémité (142) comportant une deuxième surface d'étanchéité (144) constituée d'un revêtement comprenant un matériau ayant un niveau de dureté supérieur à environ 1200 Knoop, la deuxième surface d'étanchéité (144) ayant une épaisseur supérieure à environ 35 µm, et ayant une rugosité moyenne (Ra) d'environ 0,25 µm ou moins.

26. Procédé de fabrication d'une chenille pour un engin de travaux à chenilles, comprenant :
former une bague (122) ayant une surface extérieure (138), une surface intérieure (140), et une face d'extrémité (142) ;
vaporiser un revêtement sur au moins l'une de la face d'extrémité (142) et de la surface extérieure (138), le revêtement formant une surface d'étanchéité (144), la surface d'étanchéité (144) comprenant un matériau ayant une dureté supérieure à environ 1200 Knoop, et la vaporisation du revêtement comprenant l'application du revêtement jusqu'à ce que le revêtement atteigne une épaisseur supérieure à environ 75 µm ;
abaisser la rugosité moyenne de la surface d'étanchéité (144) à environ 0,25 µm ou moins ;
insérer une broche dans la bague (122), la bague (122) pouvant tourner autour de la broche ;
placer un joint d'étanchéité en contact avec la surface d'étanchéité (144) pour faciliter la lubrification de la bague (122) ; et
fixer la bague (122) à la chenille.

27. Procédé selon la revendication 26, dans lequel le fait d'abaisser la rugosité moyenne comprend au moins une étape parmi un polissage, un meulage, une rectificationet un rodage de la surface d'étanchéité (144).

28. Procédé selon la revendication 26, dans lequel la vaporisation du revêtement comprend une vaporisation thermique du revêtement.

29. Procédé selon la revendication 28, dans lequel la vaporisation thermique du revêtement comprend une projectionpar flamme oxygène-carburant à haute vitesse du revêtement.

30. Procédé selon la revendication 26, dans lequel la formation de la bague (122) comprend la fixation d'une rondelle à la bague (122), la rondelle formant au moins une partie de la face d'extrémité (142).

31. Procédé selon la revendication 26, dans lequel la formation de la bague (122) comprend la fixation d'un manchon à la bague (122), le manchon formant au moins une partie de la surface extérieure (138) de la bague (122).
